# EUROPEAN PATENT APPLICATION

(11) **EP 2 687 988 A1**
(43) Date of publication of application: **22.01.2014**
(21) Application number: 13170283.9
(22) Date of filing: 03.06.2013
(51) Int. Cl.: G06F 11/14

(54) **Method for contents backup and an electronic device thereof**

(30) Priority: 04.06.2012 KR 20120059815
(71) Applicant: Samsung Electronics Co., Ltd, Gyeonggi-do 443-742 (KR)
(72) Inventor: Kim, Suk-Yeong, Gyeonggi-do, (KR); Lee, Yang-Soo, Gyeonggi-do, (KR); An, Tea-In, Gyeongsangbuk-do, (KR); Lee, Seung-Bum, Gyeonggi-do, (KR); Heo, Jin, Busan, (KR)
(74) Representative: Jenkins, Richard Gavin

(57) **Abstract**

A method of operating an electronic device includes selecting contents to be backed up on the basis of a usage pattern of the contents, generating backup data of the contents, and transmitting the backup data to a backup server. A priority is assigned for determining whether to a backup of the contents should occur on the basis of the usage pattern of the contents. A backup target is selected according to at least one of the per-contents usage frequency and the priority.

## Description

### CLAIM OF PRIORITY

This application claims the benefit under 35 U.S.C. § 119(a) from a Korean patent application filed in the Korean Intellectual Property Office on June 4, 2012 and assigned Serial No. 10-2012-0059815, the entire disclosure of which is hereby incorporated by reference in its entirety.

### BACKGROUND OF THE INVENTION

### 1. Field of the Invention

The present invention relates to methods and an apparatus to backup contents and an electronic device thereof.

### 2. Description of the Related Art

With the rapidly growing demands on many digital devices and particularly mobile devices, various services have been provided by using such devices. However, since the devices have limitations in storage space and arithmetic units, the services provided by the devices and a usage scope thereof are inevitably limited. Particularly, in case of a portable device, storage capacity, power, etc., are limited to a greater extent than many stationary devices.

Therefore, a cloud service is proposed as one way a limitless storage space and arithmetic unit can be achieved in the aforementioned device having such a limitation. The cloud service allows an individual user to store contents of the user into a cloud system and then to use the contents by synchronizing the contents from among a plurality of devices of the same user. Basically, the cloud service is based on a process of backing up the user's contents stored in the user device.

The backup process of the cloud service is performed on contents predetermined by the user, or contents indicated by a direct designation of the user. At present, a backup mechanism has an advantage in that the user can directly manage both of the backup process and a backup target. Occasionally, however, the backup mechanism may be inconvenient to the user. In addition, if contents which are backed up in the cloud system are not deleted from the user device, storage space efficiency of a terminal is not much improved.

Accordingly, there is a long-felt need in the art for a method for more effective backup when providing a contents backup service, similarly to the cloud system.

### SUMMARY OF THE INVENTION

An aspect of the present invention is to solve at least some of the above-mentioned problems and/or disadvantages and to provide at least the advantages described below. Accordingly, an exemplary aspect of the present invention is to provide a method for effective contents backup, and an electronic device thereof.

Another exemplary aspect of the present invention is to provide a method for contents backup on the basis of a contents usage pattern of a user, and an electronic device thereof.

Still another exemplary aspect of the present invention is to provide a method for using backed up contents in a wireless communication system, and an electronic device thereof.

Yet another exemplary aspect of the present invention is to provide a method for recognizing a device usage pattern and a contents usage pattern in a wireless communication system, and an electronic system thereof.

In accordance with a first exemplary aspect of the present invention, a method of operating an electronic device is provided. The method preferably includes automatically selecting contents to be backed up on the basis of a usage pattern of the contents, generating backup data of the contents, and transmitting the backup data to a backup server.

In accordance with a second exemplary aspect of the present invention, a method of operating an electronic device is provided. The method includes, upon generation of an instruction for executing backed up contents, transmitting a request for backup data of the backed up contents to a backup server, wherein the request includes unique identification information of the backup data, receiving the backup data from the backup server, restoring the contents by using information required to restore the backed up contents, and executing the contents.

In accordance with a third exemplary aspect of the present invention, a method of operating a backup server is provided. The method includes receiving backup data from a user device, storing the backup data, assigning unique identification information to the backup data, and transmitting the unique identification information to the user device.

In accordance with a fourth exemplary aspect of the present invention, an electronic device is provided. The electronic device includes a memory for storing at least one software module executable by a controller, the controller loaded with machine executable code stored on a non-transitory machine readable medium, and a communication unit including a transceiver for transmitting and receiving data under the control of the controller, wherein the machine executable code configures the controller on the basis of a usage pattern of the contents, generates backup data of the contents, and transmits the backup data to a backup server.

In accordance with a fifth exemplary aspect of the present invention, an electronic device is provided. The electronic device includes a non-transitory memory for storing at least one software module comprising machine executable code executable by a controller, the controller executing the machine executable code at least one software module, and a communication unit comprising a transceiver that transmits and receives data under the control of the controller, wherein the controller is configured for executing a back up of contents that includes transmitting a request for backup data of the backed up contents to a backup server, receiving the backup data from the backup server, restoring the contents by using information required to restore the backed up contents, and executing the contents.

In accordance with a sixth exemplary aspect of the present invention, a backup server device is provided. The backup server includes a non-transitory memory for storing machine executable code that is executable by a controller, the controller for configured for controlling the backup server device, and a communication unit comprising a transceiver that transmits and receives data under the control of the controller, wherein the machine executable code configures the controller to receive backup data from a user device, store the backup data, assign a unique identification information to the backup data, and transmit the unique identification information to the user device.

### BRIEF DESCRIPTION OF THE DRAWINGS

The above and other exemplary aspects, features and advantages of certain exemplary embodiments of the present invention will become more apparent to the person or ordinary skill in the art from the following detailed description taken in conjunction with the accompanying drawings, in which:
FIG. 1 is a schematic view illustrating a structure of a system for a backup service according to an exemplary embodiment of the present invention;
FIG. 2 illustrates an example of a backup process on the basis of a backup service according to an exemplary embodiment of the present invention;
FIGs. 3A and 3B illustrate examples of a screen configuration when backing up contents according to an exemplary embodiment of the present invention;
FIGs. 4A and 4B illustrate examples of a screen configuration when backed up contents are executed according to an exemplary embodiment of the present invention;
FIG. 5 illustrates a contents backup process according to an exemplary embodiment of the present invention;
FIG. 6 illustrates a process of using backed up contents according to an exemplary embodiment of the present invention;
FIG. 7 illustrates an example of a logical structure of a terminal according to an exemplary embodiment of the present invention;
FIG. 8 illustrates an example of a logical structure of a controller of a terminal according to an exemplary embodiment of the present invention;
FIG. 9 illustrates a process for selecting a backup target of a terminal according to an exemplary embodiment of the present invention;
FIGs. 10A and 10B illustrate a contents backup process of an electronic device and a combination of elements corresponding thereto according to an exemplary embodiment of the present invention;
FIG. 11 illustrates a contents backup process of an electronic device according to another exemplary embodiment of the present invention;
FIG. 12 illustrates a process for executing contents of an electronic device according to another exemplary embodiment of the present invention;
FIG. 13 illustrates a process for contents exception handling of an electronic device according to an exemplary embodiment of the present invention;
FIG. 14 illustrates a process for deleting contents of an electronic device according to an exemplary embodiment of the present invention;
FIGs. 15A and 15B illustrate respective operational examples of a process for contents backup of a backup server and a combination of elements corresponding thereto according to an exemplary embodiment of the present invention;
FIG. 16 illustrates a process for deleting contents of a backup server according to an exemplary embodiment of the present invention;
FIG. 17 is a block diagram illustrating a structure of an electronic device according to an exemplary embodiment of the present invention; and
FIG. 18 is a block diagram illustrating a structure of a backup server according to an exemplary embodiment of the present invention.

### DETAILED DESCRIPTION

The present invention relates to a content backup, such as remote backup in a cloud-based system. The present invention described hereinafter relates to a method and apparatus for contents backup in a wireless communication system.

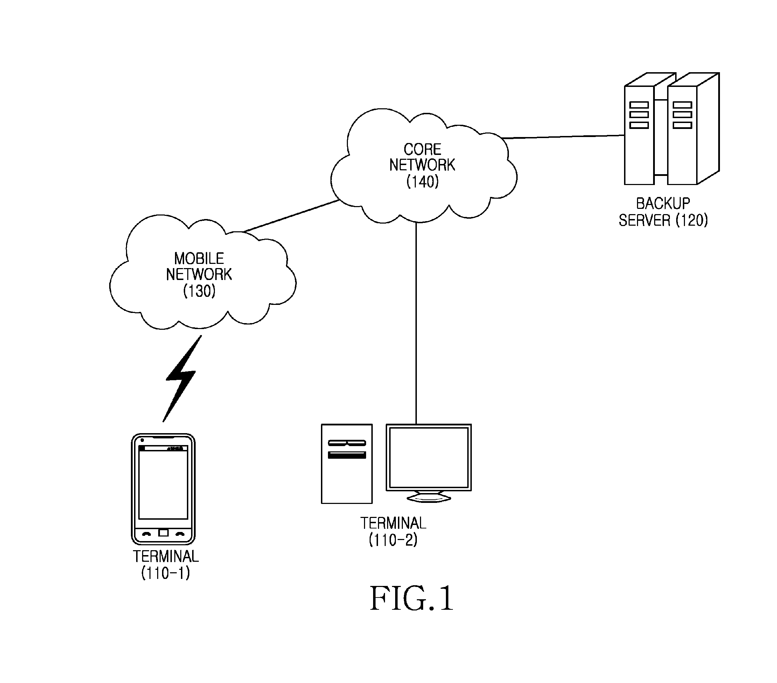

FIG. 1 is a schematic view illustrating a structure of a system for a backup service according to an exemplary embodiment of the present invention.

Referring now to FIG. 1, the system includes terminals 110-1 and 110-2 and a backup server 120. The terminals 110-1 and 110-2 are user equipments, and can store and execute digital contents. The terminals 110-1 and 110-2 may also be referred to as "electronic devices". The terminals 110-1 and 110-2 in this example comprise mobile terminal 110-1 and a fixed terminal 110-2. However, an artisan understands and appreciates that in no way is the claimed invention applicable only to the electronic devices shown in FIG. 1. In this non-limiting example, the mobile terminal 110-1 uses a wireless interface, and is accessible to the backup server 120 by accessing to a core network 140 via a mobile network 130. An artisan should appreciate that the terminal 110-1 can also use, a short range communication protocol (e.g. a WiFi router) that in turn communicates with the backup server 120 via an Internet Service Provider.

The fixed terminal 110-2 uses a wired interface, and preferably is directly accessible to the core network 140 via a wired connection. Although not shown in FIG. 1, in case of including a wireless communication, the fixed terminal 110-2 can access the mobile network 130 or a wireless carrier to communicate with the core network 140. The mobile terminal 110-1 can comprise, for example, one of a smart phone, a portable terminal, a mobile phone, a mobile pad, a media player, a tablet computer, a handheld computer, a camera with wireless transmission capability, and a Personal Digital Assistant (PDA). The fixed terminal 110-2 may comprise, for example, a Personal Computer (PC). The computer could even comprise, a proxy server, as the present invention is not to be limited by the illustrative example.

With continued reference to FIG. 1, the backup server 120 provides a storage space for backing up contents generated and/or stored in the terminals 110-1 and 110-2. In other words, the backup server 120 stores the contents provided from the backup server 120, and provides the stored contents at the request of the backup server 120. Herein, the contents include an application and a data file (e.g., a document, an audio source, an image, a moving picture, etc.). According to the exemplary embodiment of the present invention, the terminals 110-1 and 110-2 have their contents backed up by the backup server 120 on the basis of a usage pattern of the contents by the terminals 110-1 and 110-2 of the user and a usage pattern of the user device. A backup process according to the exemplary embodiment of the present invention will be described below in accordance with a detailed example.

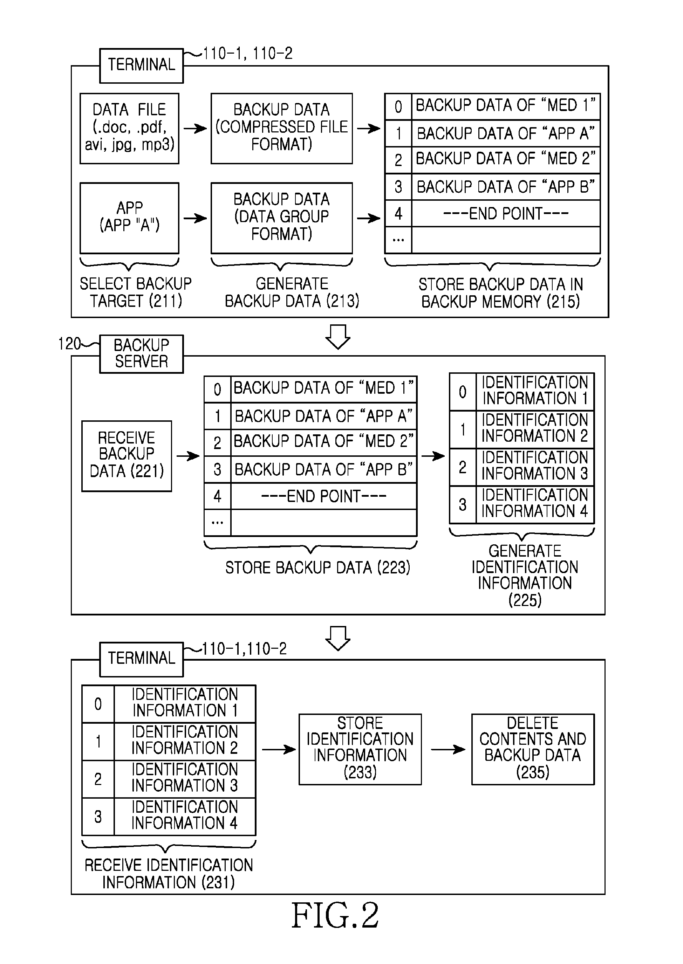

FIG. 2 illustrates an example of a backup process on the basis of a backup service according to an exemplary embodiment of the present invention.

Referring now to FIG. 2, at 211, a terminal 110-1, 110-2 selects at least one backup target from stored contents, i.e., stored data files and installed applications. In this case, the terminal may select the at least one backup target on the basis of a usage frequency of each of the contents and a priority assigned to each of the contents.

At 213, the terminal 110-1, 110-2 generates backup data with respect to the at least one selected backup target. The backup data may have a format of a data group or a compressed file. Backup data for a data file may be data obtained by compressing a file. Backup data for an application may be a compressed file or a data group including a folder structure in a state in which the application is installed, a file for executing the application, and a file generated in a process of executing the application. Herein, the file generated in the process of executing the application includes at least one of a file generated by a user and a file generated by the application. In other words, the backup data for the application may be a file obtained by compressing, in a current state, a root folder and all its sub-folders in which the application is installed.

At 215 in the terminal 110-1, 110-2, the terminal stores the backup data in a backup memory. The backup memory is a part of a non-transitory storage device included in the terminal and ear-marked for backup data, and the terminal maintains the backup data at least until the backup data is provided to the backup server. In case shown FIG. 2, backup data for two data files (MED 1 and MED 2) and two applications (APP1 and APP 2) is generated and stored. In other words, after selecting contents to be backed up, the terminal generates the backup data, and stores the backup data in the backup memory.

At 221 as indicated by the arrow, the backup server 120 receives the backup data from the terminal 110-1, 110-2. In other words, the terminal transmits the backup data to the backup server. The transmitting of the backup data may be performed at a time determined by a user or by the backup server, or may be performed at a pre-defined time, or may be performed at a time when a specific condition is satisfied.

For example, the specific condition may be defined on the basis of a device usage rate of the user. Specifically, the terminal may transmit the backup data at a time period having a smallest device usage rate. For another example, the specific condition may be defined on the basis of an available memory capacity. Specifically, the terminal may transmit the backup data when the available memory capacity is less than or equal to a threshold. Therefore, the generation of backup data at 213 and the receipt of backup data 221 may be performed with a specific time interval. Although not shown in FIG. 2, before the backup data is received, the backup server may perform an authentication process for the backup service with respect to the terminal.

At 223, the backup server stores the received backup data to a non-transitory storage element included in or in communication with the backup server 120. In case of FIG. 2, backup data for two data files and backup data for two applications are stored.

With continued reference to FIG. 2, at 225, the backup server 120 generates identification information for each of the stored backup data. The identification information is information for indicating from which user the backup data is provided and which data is provided from the user among the provided backup data. Further, the identification information may include information for indicating a location at which the backup data is stored in the backup server. In the case shown in FIG. 2, four pieces of identification information are generated respectively for four pieces of backup data. For example, the identification information may be a Uniform Resource Locator (URL). The identification information is transmitted to the terminal.

At 231, the terminal receives the identification information from the backup server. Accordingly, the terminal can recognize that the backup data is successfully stored in the backup server.

At 233, the terminal stores the identification information.

At 235, the terminal deletes the backup data and the backed up contents. However, information required to restore the contents and information for indicating the existence of the contents is not deleted.

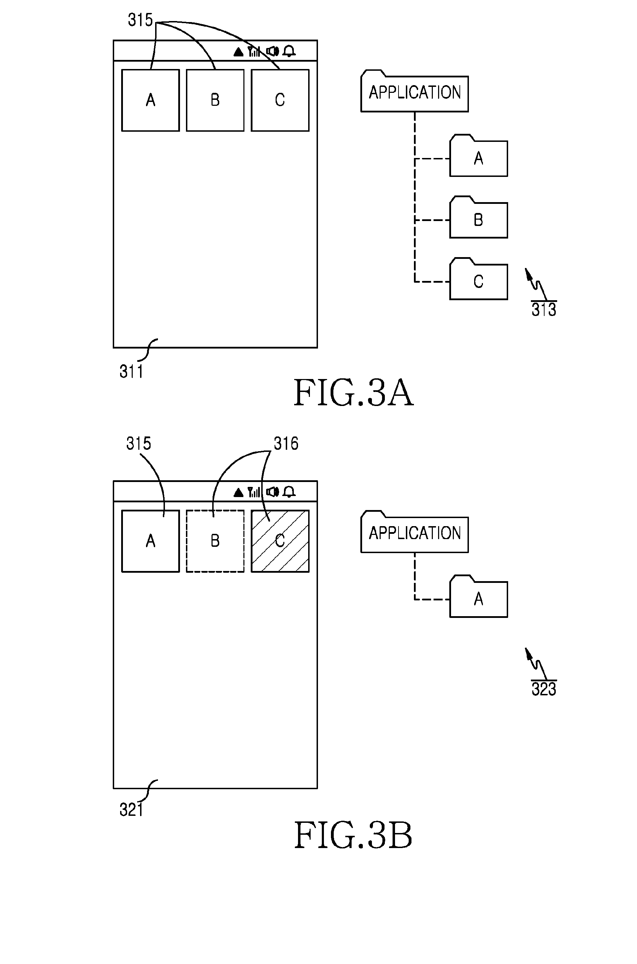

In the backup process described above with reference to FIG. 2, the terminal can display an application by distinguishing a backed up application and a non-backed up application. FIG. 3 illustrates an example of a screen configuration when backing up contents according to an exemplary embodiment of the present invention.

FIG. 3A illustrates an icon display screen 311 of applications before backup and folders 313 of the applications.

Referring now to FIG. 3A, it is shown that an application A, an application B, and an application C are installed, and respective icons 315 of the three applications are displayed on screen 311. Accordingly, a user can execute a corresponding application by using an icon 315 displayed on the screen 311. Regarding the folders 313, in this example each of the applications have their own respective folder, each folder including files for executing a corresponding application and files generated in the process of executing the application. Although only a root folder of each application is illustrated in FIG. 3A, a folder of each application can include at least one sub-folder.

FIG. 3B illustrates an icon display screen 321 of applications after backup and folders 323 of the applications. It is assumed in FIG. 3 that the application B and the application C are backed up. Referring to FIG. 3B, an icon 316 of the backed up application is displayed such that it is distinguished from the icon 315 before the backup. A way of expressing the icon after the backup can be defined variously according to a detailed exemplary embodiment of the present invention.

For example, the icon of the backed up application may be displayed transparently, shaded, or attached with a pre-defined mark. Although the icon of the application B and the icon of the application C are displayed in different ways of expression in FIG. 3B, this is only for showing applicability of various ways of expression, and thus the same expression way is also applicable. In this case, in the folders 323, the backed up applications B and C are deleted. That is, by deleting the applications B and C, the terminal can free up storage space previously used to store the deleted applications. However, although not shown in FIG. 3B, information required for restoration of the applications B and C is not deleted. In addition, according to another exemplary embodiment of the present invention, in order to facilitate the restoration of the backed up contents at a later time, the terminal may delete only a file stored in each folder, while a root folder and its sub-folders of the backed up application remain intact.

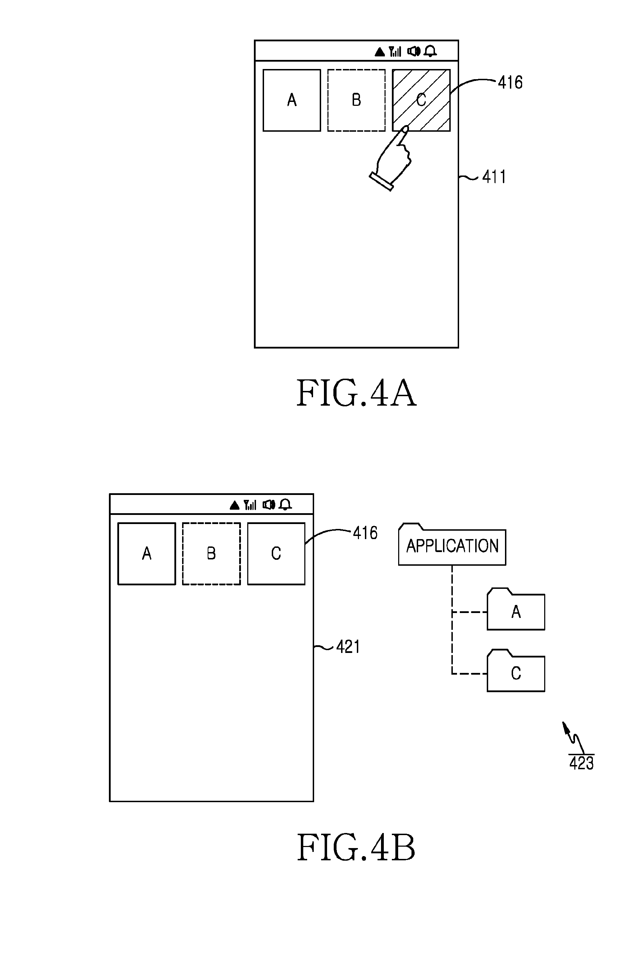

After the application is backed up through the aforementioned procedure of FIG. 2, the user can execute the backed up application without an additional procedure. In other words, from the viewpoint of the user, even if the backed up application is used, an additional instruction for restoring the application is not required. The backed up application is executed automatically with requiring a restoration of the backed up application, such restorations in a conventional apparatus is often time-consuming and difficult for a user to navigate the proper command(s). The execution of the backed up application will be described below from the viewpoint of the terminal. FIG. 4 illustrates an example of a screen configuration when backed up contents are executed according to an exemplary embodiment of the present invention.

Referring now to FIG. 4A, in a state where applications B and C are backed up, a user selects an icon 416 of the application C to instruct the terminal to execute the application C. Accordingly, the a controller of the terminal requests and receives backup data of the backed up application C, and automatically restores the application C from the received backup data. Since the backup data includes files for executing an application which exists at a backup execution time and files generated in an application execution process, the application C can be restored at a time approximately equal to a generation time of the backup data. Accordingly, icons 416 of the applications are displayed as shown in a display screen 421 of FIG. 4B, and folders 423 of the applications include a folder of the application C. Thereafter, the terminal executes the application C.

In addition to the aforementioned contents backup process and the process of executing the backed up contents, the present invention provides a backup exception handling method. In other words, according to the exemplary embodiment of the present invention, the terminal can provide a backup exception function to the user. Specifically, the user can designate a backup exception for specific contents. In this case, the terminal can register the designated contents as a backup-disabled target. In this case, if the designated contents have already been backed up, the terminal acquires backup data of the designated contents from a backup server, restores the designated contents, and registers the contents as a backup-disabled target.

In addition, the present invention provides a method of deleting backed up contents. For example, if the user requests deletion of one of the backed up contents, the terminal according to this exemplary embodiment requests the backup server to delete the contents requested to be deleted. Accordingly, the backup server deletes the backup data and identification information of the contents requested to be deleted.

Hereinafter, the present invention describes an interworking process of a terminal and a backup server for providing the aforementioned backup service with reference to the accompanying drawings.

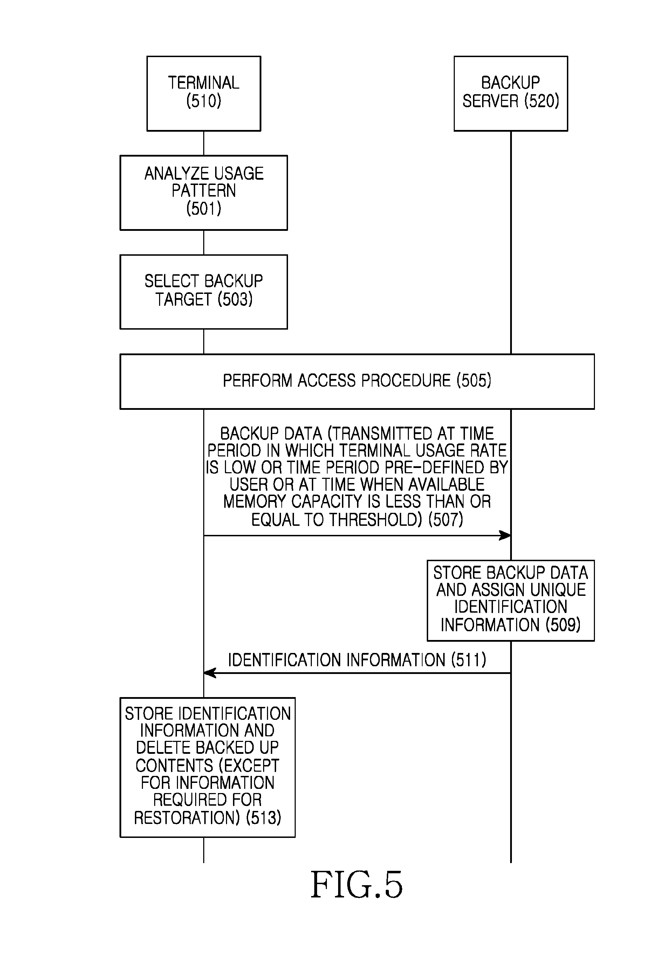

FIG. 5 illustrates exemplary operation of a contents backup process according to an exemplary embodiment of the present invention occurring between terminal 510 and backup server 520.

Referring now to FIG. 5, at 501, the terminal 510 recognizes a usage pattern of a user. Herein, the usage pattern includes a device usage rate of the terminal 510 and a usage frequency per contents.

At 503, the terminal 510 selects as a backup target, the contents having a low usage frequency or a low priority as a result of the recognizing of the usage pattern of the user.

At 505, the terminal 510 performs an access process with respect to a backup server 520. For example, the terminal 510 transmits a user IDentifier (ID) to the backup server 520. The backup server 520 examines whether the user ID is valid, and if the user ID is valid, reports to the terminal 510 that an access to the terminal 510 is accepted.

At 507, the terminal 510 transmits the backup data of the selected contents to the backup server 520 according to predetermined criteria, for example, at a time period in which a usage rate of the terminal 510 is low, or a time period pre-defined by the user, or at a time when an available memory capacity is less than or equal to a threshold.

At 509, the backup server 520 stores the backup data received from the terminal 510, and assigns unique identification information (e.g., URL) to the backup data.

At 511, the backup server 520 transmits the uniquely assigned identification information to the terminal 510.

At 513, the terminal 510 stores the uniquely assigned received identification information from the backup server 520, and deletes the backed up contents. However, information required for restoration of the backed up contents is not deleted. For example, the information required for restoration may include at least one of a name of the contents, an icon, information on a storage path, and a folder structure.

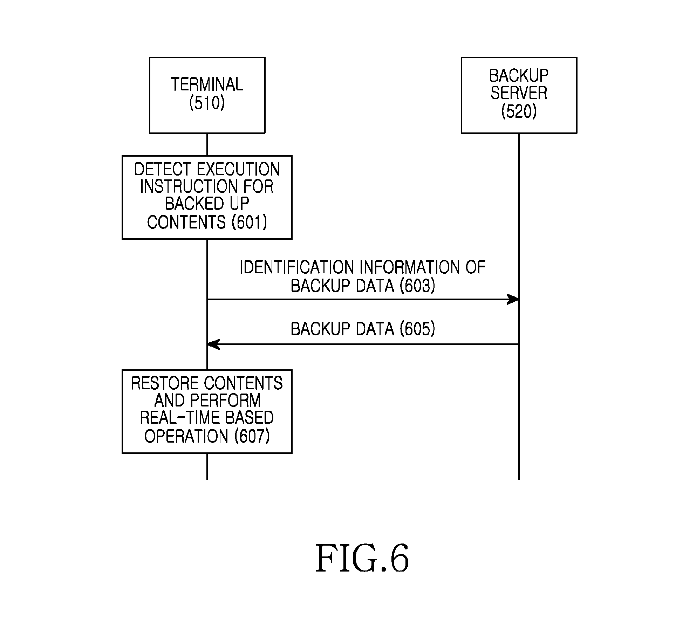

FIG. 6 illustrates a process of using backed up contents according to an exemplary embodiment of the present invention.

Referring now to FIG. 6, at 601, a terminal 510 detects an execution instruction for the backed up contents. The instruction could come from a user request, but also might be an execution instruction from an application, for example that may require contents that were backed up to complete a request.

Accordingly, at 603, in order to request receipt of the backup data of the backed up contents, the terminal 510 transmits identification information (e.g., URL) of the backup data to a backup server 520. The backup server 520 examines a user ID of the terminal 510 and the identification information.

At 605, if the user ID and the identification information of the backup data are valid, the backup server 520 transmits the backup data to the terminal 510.

At 607, the terminal 510 restores contents from the backup data received from the backup server 520, and performs a real-time based operation. Herein, the operation implies executing of the contents. For example, if the contents correspond to an application, the operation implies executing of the application. Alternatively, if the contents correspond to a data file, the operation implies reproducing, reading, or the like of the data file.

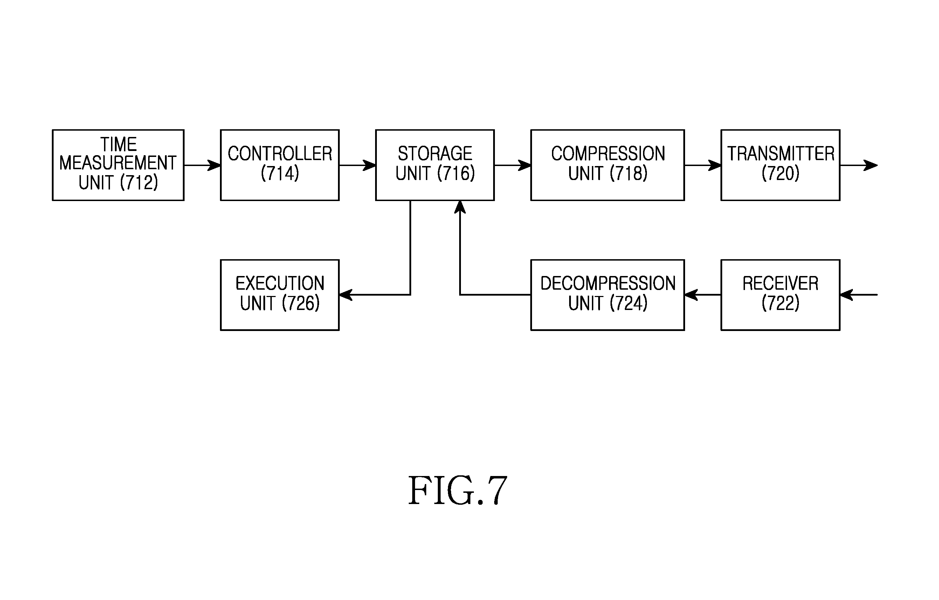

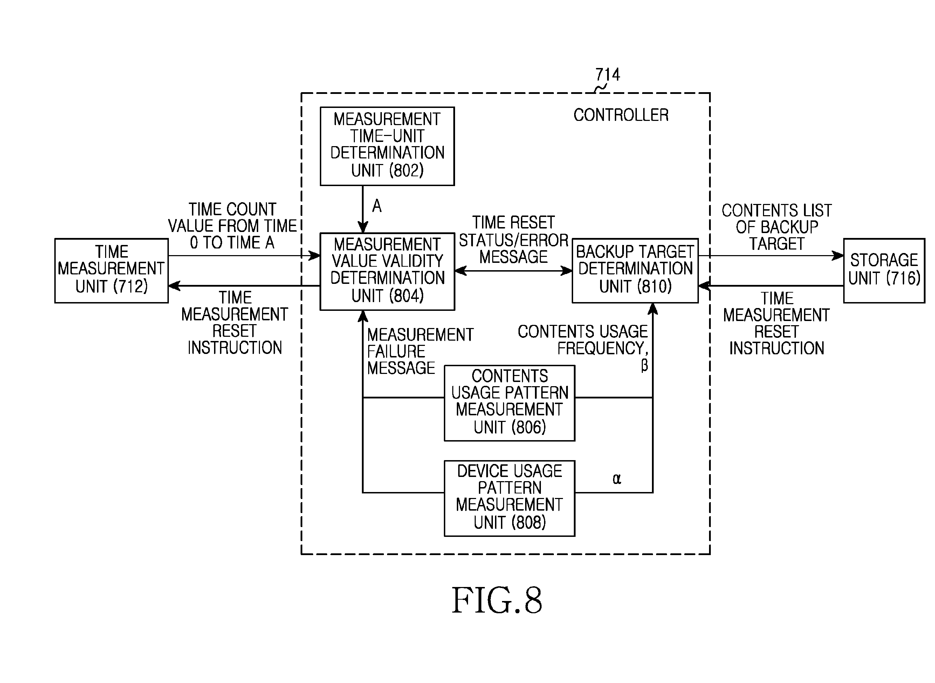

In order to perform the procedures of FIG. 5 and FIG. 6, the terminal may have logical structures of FIG. 7 and FIG. 8. These items comprise hardware and constitute a statutory invention in compliance with 35 U.S.C. §101.

FIG. 7 illustrates an example of a logical structure of a terminal according to an exemplary embodiment of the present invention. Referring to FIG. 7, the terminal includes a time measurement unit 712 (clock), a controller 714 (comparator or microprocessor), a non-transitory storage unit 716, a compression unit 718, a transmitter 720, a receiver 722, a decompression unit 724, and an execution unit 726 (comparator or microprocessor).

In a case of backing up contents, the time measurement unit 712 measures a time to record a usage pattern during a unit time defined to determine contents having a low usage frequency or a low priority. The controller 714 measures the usage pattern according to a statistical number during the time measured by the time measurement unit 712. The storage unit 716 stores information on contents as a backup target measured and finally determined by the controller 714. The compression unit 718 compresses information of the backup target. In other words, the compression unit 718 generates backup data. The transmitter 720 transmits the backup data. Further, the receiver 722 receives identification information (e.g., URL) for the backup data from the backup server. The storage unit 716 deletes the remaining parts, other than information (e.g., a name, an icon, a storage path, etc.) required for restoration of the data, from data related to the backed up contents. Further, the controller 714 delivers a time reset instruction to the time measurement unit 712. Both the compression unit and decompression unit will either be loaded for execution into hardware such as a microprocessor or controller, or may include their own hardware including a processor.

When using the backed up contents, the receiver 722, which is preferably wireless but could include wired, receives backup data of the backed up contents. The decompression unit 724 decompresses the backup data. The decompressed data is stored in the storage unit 716. In this case, the decompressed data is stored in a storage path of the contents, and thus the contents can be restored. The execution unit 726 performs an operation for the restored contents.

FIG. 8 illustrates an example of a logical structure of the controller 714 of a terminal according to an exemplary embodiment of the present invention. Referring to FIG. 8, the controller 714 includes a measurement time-unit determination unit 802, a measurement value validity determination unit 804, a contents usage pattern measurement unit 806, a device usage pattern measurement unit 808, and a backup target determination unit 810. None of the units described herein constitute software per se and comprise hardware to form a statutory invention under their broadest reasonable interpretation.

The measurement time-unit determination unit 802 determines an update period of a usage pattern. The measurement value validity determination unit 804 determines validity of a usage pattern value measured by the controller 714 during a time 0 to a usage pattern measurement time A. If the value is not valid, or a measurement failure occurs, or identification information of backup data is received from the backup server after backup, then the measurement value validity determination unit 804 delivers a time measurement reset message for resetting a time to the time measurement unit 712. The contents usage pattern measurement unit 806 measures a usage frequency of the contents and a usage time of the contents during a unit time A. The device usage pattern measurement unit 808 measures a usage frequency of the terminal per time period during the unit time A. The backup target determination unit 810 determines contents having a low usage frequency or a low priority as a backup target.

A time reset instruction delivered to the time measurement unit 712 is delivered by the measurement value validity determination unit 804 to the time measurement unit 712. However, according to another exemplary embodiment of the present invention, the time reset instruction may be generated by the contents usage pattern measurement unit 806, the device usage pattern measurement unit 808, the backup target determination unit 810, and the storage unit 716. The backup target determination unit 810 may determine the backup target on the basis of a value α provided from the device usage pattern measurement unit 808 and a contents usage frequency β provided from the contents usage pattern measurement unit 806.

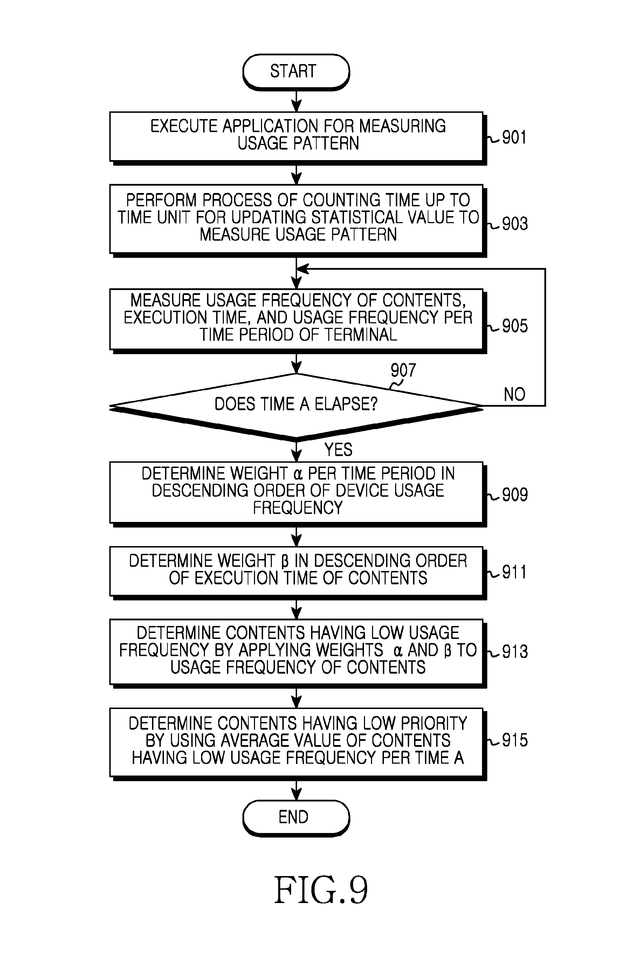

In the aforementioned backup process, an example of a process for selecting a backup target is as follows. FIG. 9 illustrates a process for selecting a backup target of a terminal according to an exemplary embodiment of the present invention.

Referring now to FIG. 9, at 901 the terminal executes an application which operates as a background process for measuring usage pattern information.

At 903, the terminal executes a process for counting up to a time unit A for updating a statistical value to measure a usage pattern.

At 905, the terminal measures a usage frequency, an execution time of the contents, and a device usage frequency per time period from a time 0 to a time A.

At 907, the terminal determines whether or not the time A elapses.

At 909, in which the time A elapses, and the terminal determines whether a weight α per time period in a descending order of a usage frequency of the device.

At 911, the terminal determines a weight β in a descending order of an execution time of the contents.

At 913, the terminal determines contents having a low usage frequency during the time A by applying the weights α and β to the usage frequency of the contents.

At 915, the terminal determines contents having a low priority by using an average value of the contents having a low usage frequency measured during the time A.

The method described above in relation with FIG. 9 under of the present invention may be provided as one or more instructions in one or more software modules, or computer programs stored in an electronic device including a portable terminal.

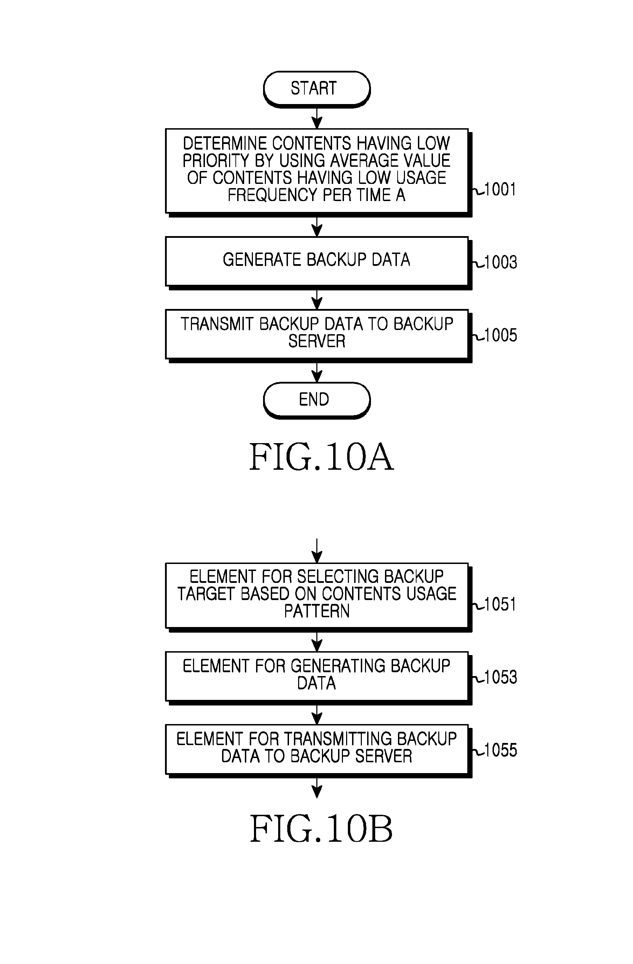

FIGs. 10A and 10B illustrate a contents backup process of an electronic device and a combination of elements corresponding thereto according to an exemplary embodiment of the present invention.

Referring now to FIG. 10A, at 1001 the electronic device selects a backup target on the basis of a contents usage pattern. The contents usage pattern includes at least one of a per-contents usage time measured during a pre-defined unit time, a per-contents usage frequency, a usage time period of the contents, and a device usage rate per time period.

More specifically, the electronic device can determine a priority of each of the contents on the basis of the usage pattern of the contents, and can select the backup target according to at least one of the per-contents usage frequency and the priority. For example, the priority can be determined such that, the higher the device usage rate in a time period in which contents are used, and the longer the usage time of the contents, the higher the priority is.

At 1003, the electronic device generates backup data. The backup data may have a format of a data group or a compressed file. Backup data for a data file may be a compressed file or a data group including the data file. Backup data for an application may be a compressed file or a data group including a folder structure in a state in which the application is installed, a file for executing the application, and a file generated in a process of executing the application. Herein, the file generated in the process of executing the application includes at least one of a file generated by a user and a file generated by the application.

At 1005, the electronic device transmits the backup data to the backup server. The transmitting of the backup data may be performed at a time determined by a user, or may be performed at a pre-defined time, or may be performed at a time when a specific condition is satisfied. For example, the specific condition may be defined on the basis of a user's device usage rate per time period. Specifically, the electronic device may transmit the backup data at a time period having a minimum device usage rate in a pre-defined time range. For example, the time range may be defined as one day. For another example, the specific condition may be defined on the basis of an available memory capacity. Specifically, the terminal may transmit the backup data when the available memory capacity is less than or equal to a threshold. For example, the threshold may be defined as an absolute value or ratio. Thus, there can be one predetermined criteria or two or more that result in the transmitting of backup data.

To perform the procedure of FIG. 10A, the electronic device may have elements of FIG. 10B. Referring to FIG. 10B, the electronic device may include an element 1051 for selecting a backup target on the basis of a contents usage pattern, an element 1053 for generating the backup data, and an element 1055 for transmitting the backup data to the backup server. These elements will comprise machine executable code loaded into and executed by hardware such as a controller or microprocessor configured for operation with such elements.

The method described above in relation with FIG. 10A under of the present invention may be provided as one or more instructions in one or more software modules, or computer programs stored in an electronic device including a portable terminal.

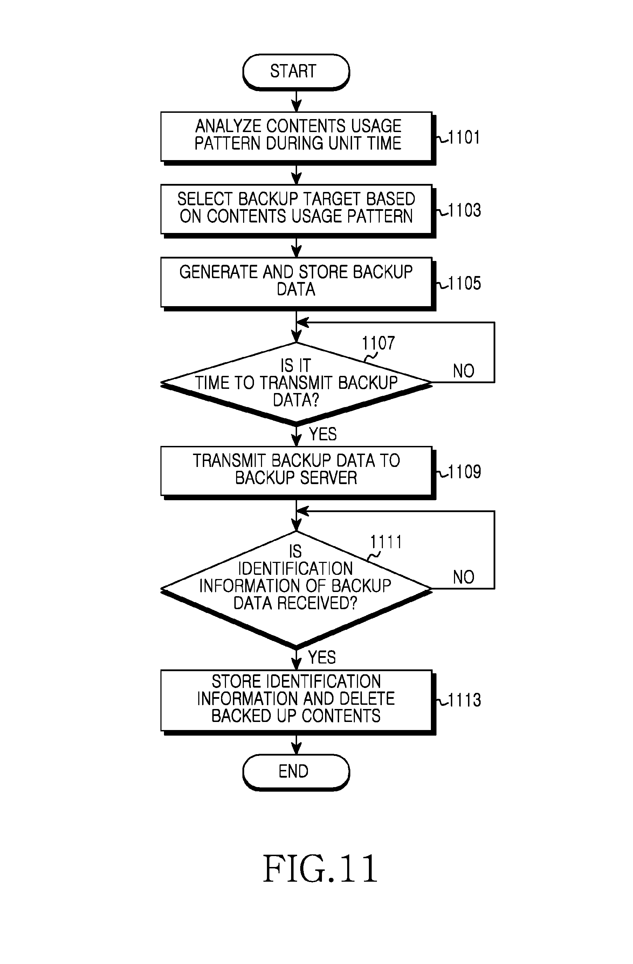

FIG. 11 illustrates a contents backup process of an electronic device according to another exemplary embodiment of the present invention.

Referring now to FIG. 11, at 1101. the electronic device includes hardware such as a processor, microprocessor or controller configured to analyze a usage pattern during a unit time. The usage pattern includes a contents usage pattern and a device usage pattern. The contents usage pattern relates to a usage history for each of contents stored in the electronic device, and includes at least one of a per-contents usage time measured during a pre-defined unit time, a per-contents usage frequency, a usage time period of the contents, and a device usage rate per time period. The device usage pattern relates to a usage history of the electronic device itself, and includes a device usage rate per time period. The device usage pattern may be measured with a longer period than the contents usage pattern.

At 1103, the a processor, microprocessor or controller of the electronic device is configured to select a backup target on the basis of a contents usage pattern. Specifically, the electronic device can determine a priority of each of the contents on the basis of the usage pattern of the contents, and can select the backup target according to at least one of the per-contents usage frequency and the priority. For example, the priority can be determined such that, the higher the device usage rate in a time period in which contents are used, and the longer the usage time of the contents, the higher the priority is.

At 1105, the electronic device generates and stores backup data under control of the processor, microprocessor or controller. The backup data may have a format of a data group or a compressed file. Backup data for a data file may be a compressed file or a group of data including the data file. Backup data for an application may be a compressed file or a data group including a folder structure in a state in which the application is installed, a file for executing the application, and a file generated in a process of executing the application. Herein, the file generated in the process of executing the application includes at least one of a file generated by a user and a file generated by the application.

At 1107, the electronic device determines whether it is time to transmit the backup data. The transmitting of the backup data may be performed at a time determined by a user, or may be performed at a pre-defined time, or may be performed at a time when a specific condition is satisfied. For example, the specific condition may be defined on the basis of a user's device usage rate per time period. Specifically, the time to transmit the backup data may constitute a time period having a minimum device usage rate within a pre-defined time range. For example, the time range may be defined as one day. For another example, the specific condition may be defined on the basis of an available memory capacity. Specifically, the terminal may transmit the backup data when the available memory capacity is less than or equal to a threshold. For example, the threshold may be defined as an absolute value or ratio.

At 1109, when it is time to transmit the backup data, the electronic device transmits the backup data to the backup server. Although not shown in FIG. 11, before transmitting the backup data, the electronic device may perform an access procedure with respect to the backup server. The access procedure may include a process of transmitting a user ID and a process of receiving an access grant.

At 1111, the electronic device determines whether identification information of the backup data is received. The identification information is information for indicating the backup data stored in the backup server. For example, the identification information may be a URL for the stored backup data. If the identification information is received, it implies that the backup data is correctly stored in the backup server, that is, backup is successfully performed.

At 1113, upon receiving the identification information, the electronic device stores the identification information, and deletes the backed up contents from a storage element included in the electronic device. However, information required to restore the backed up contents and information indicating the existence of the contents are not deleted. In other words, the electronic device deletes remaining parts, other than the information required to restore the backed up contents and the information indicating the existence of the contents, from the data related to the backed up contents. For example, the information required to restore the backed up contents may include at least one of a contents name, a storage path, a folder structure and an icon. In addition, the information indicating the existence of the contents may include an icon.

The method described above in relation with FIG. 11 under of the present invention may be provided as one or more instructions in one or more software modules, or computer programs stored in an electronic device including a portable terminal.

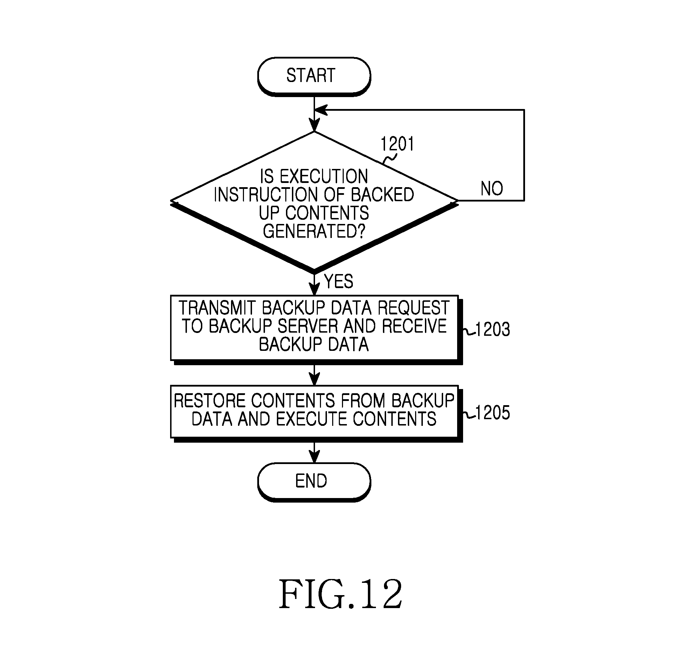

FIG. 12 illustrates a process for executing contents of an electronic device according to yet another exemplary embodiment of the present invention.

Referring now to FIG. 12, at 1201 the electronic device determines whether an execution instruction of backed up contents is generated. The execution instruction can be generated by double-clicking the backed up contents. Alternatively, another application could issue the execution instruction.

At 1203, when the execution instruction of the backed up contents is generated, the electronic device transmits to a backup server a request for backup data of the backed up contents. In other words, the electronic device requests the backup server to provide the backup data. Further, the electronic device receives the backup data from the backup server. In this case, although not shown in FIG. 12, the electronic device may perform an access process with respect to the backup server before transmitting the request for the backup data.

At 1205, the electronic device restores contents from the backup data, and executes the contents. For example, if the contents correspond to a data file, the electronic device restores the data file by decompressing the backup data, then confirms a path used before the backup of the contents and moves the data file to the confirmed location. Alternatively, if the contents correspond to an application, the electronic device confirms the path used before the backup of the contents and generates a folder according to a folder structure of the application and the confirmed location, and then de-compresses the backup data to restore files constituting the application, and then moves the files to the folder. According to another exemplary embodiment of the present invention, if a root folder and its sub-folders of the backup application are maintained, the electronic device is configured to moves the restored files to each folder without the process of generating the folders. Then, the electronic device executes the contents.

The method described above in relation with FIG. 12 under of the present invention may be provided as one or more instructions in one or more software modules, or computer programs stored in an electronic device including a portable terminal.

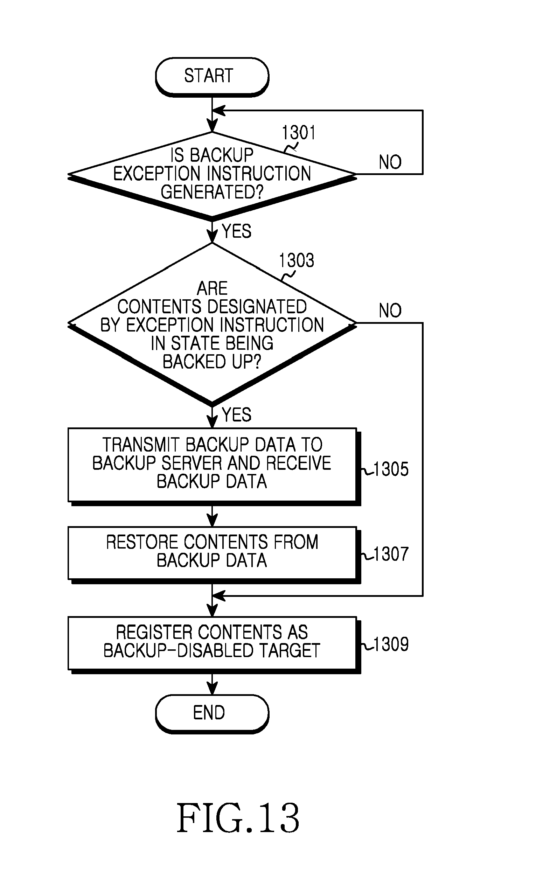

FIG. 13 illustrates a process for contents exception handling of an electronic device according to an exemplary embodiment of the present invention.

Referring now to FIG. 13, at 1301 the electronic device determines whether or not a backup exception instruction is generated. The backup exception instruction is a notification for instructing a user to designate specific contents and prohibit the backup of the contents. The user may input the backup exception instruction by means of an input element of the electronic device.

At 1303, upon generation of the backup exception instruction, the electronic device confirms whether or not the contents designated by the exception instruction is in a state of being backed up. If the designated contents are not in the state of being backed up, then at 1309 electronic device registers the contents as backup-disabled target.

Otherwise, at 1305, as the designated contents are in the state of being backed up, the electronic device transmits a request for backup data of the designated contents to a backup server, and receives the backup data from the backup server. In this case, although not shown in FIG. 13, before transmitting the request for the backup data, the electronic device may perform an access procedure with respect to the backup server.

At 1307, the electronic device restores the designated contents from the backup data. For example, if the contents correspond to a data file, the electronic device restores the data file by decompressing the backup data, then confirms a path used before the backup of the contents and moves the data file to the confirmed location. Alternatively, if the contents correspond to an application, the electronic device confirms the path used before the backup of the contents and generates a folder according to a folder structure of the application and the confirmed location, and then de-compresses the backup data to restore files constituting the application, and then moves the files to the folder. According to another exemplary embodiment of the present invention, if a root folder and its sub-folders of the backup application are maintained, the electronic device moves the restored files to each folder without the process of generating the folders.

At 1309, the electronic device registers the designated contents as a backup-disabled target. Therefore, the electronic device excludes the contents registered as the backup-disabled target when determining the backup target according to the procedure of FIG. 11.

The method described above in relation with FIG. 13 under of the present invention may be provided as one or more instructions in one or more software modules, or computer programs stored in an electronic device including a portable terminal.

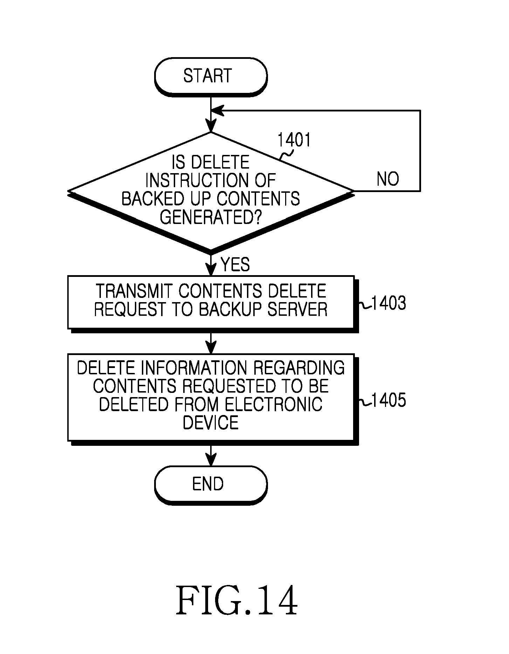

FIG. 14 illustrates a process for deleting contents of an electronic device according to an exemplary embodiment of the present invention.

Referring now to FIG. 14, at 1401 the electronic device determines whether a delete instruction of backed up contents is generated. The delete instruction is a notification for instructing a user to designate specific contents and delete the contents. The user may input the delete instruction by means of an input element of the electronic device.

At 1403, upon generation of the delete instruction of the backed up contents, the electronic device transmits to a backup server a request for deleting the contents designated by the delete instruction. The delete request is transmitted together with identification information of the backup data. In this case, although not shown in FIG. 14, before transmitting the request for the deletion, the electronic device can perform an access procedure with respect to the backup server.

At 1405, after transmitting the request for the deletion, the electronic device deletes information regarding contents stored in the electronic device and requested to be deleted. For example, the information regarding the contents include information (e.g., a storage location, etc.) for restoring the contents, information (e.g., an icon) indicating the existence of the contents, and identification information (e.g., URL) of the contents.

The method described above in relation with FIG. 14 under of the present invention may be provided as one or more instructions in one or more software modules, or computer programs stored in an electronic device including a portable terminal.

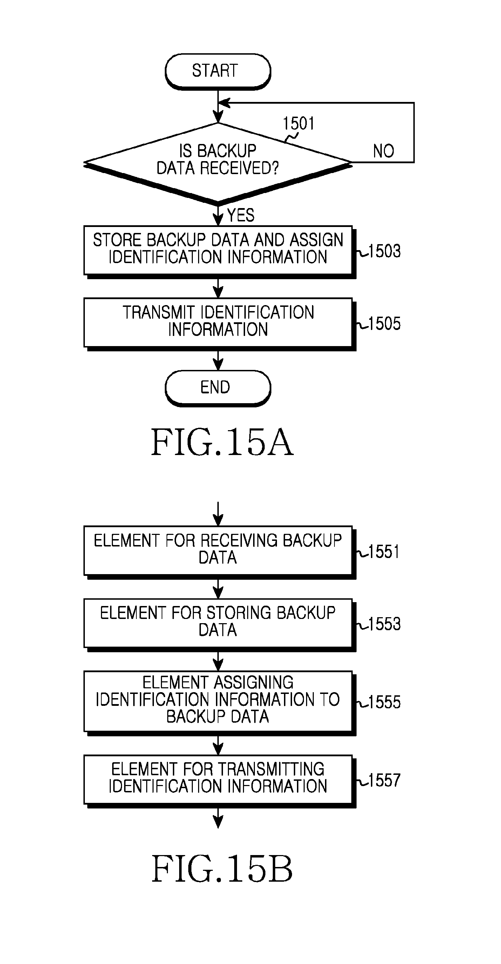

FIGs. 15A and 15B illustrate exemplary operations of a process for contents backup of a backup server and a combination of elements corresponding thereto according to an exemplary embodiment of the present invention.

Referring now to FIG. 15A, at 1501 the backup server determines whether backup data is received. The backup data is data generated to back up corresponding contents in an electronic device, that is, in a user terminal. For example, the backup data includes a data file or an application, and may have a format of a data group or a compressed file. Although not shown in FIG. 15, the backup server may perform an access process with respect to the electronic device before receiving the backup data.

At 1503, upon receiving the backup data, the backup server stores the backup data, and assigns identification information to the backup data. The identification information is information indicating from which user the backup data is provided and indicating which one corresponds to the backup data among the backup data provided from the user.

At 1505, the backup server transmits the identification information to the electronic device. The identification information is information indicating from which user the backup data is provided and indicating which one corresponds to the backup data among the backup data provided from the user. In addition, the identification information may include information indicating a location at which the backup data is stored in the backup server. It can be interpreted that the identification information is transmitted for the purpose of notifying the user the completion of the backup.

In order to perform the procedure of FIG. 15A, the backup server may have the elements of FIG. 15B. Referring to FIG. 15B, the backup server includes an element 1551 for receiving backup data (receiver and decoder), an element 1553 for storing (non-transitory memory) the backup data, an element (controller) 1555 for assigning identification information to the backup data, and an element 1557 (transmitter) for transmitting the identification information.

The method described above in relation with FIG. 15A under of the present invention may be provided as one or more instructions in one or more software modules, or computer programs stored in an electronic device including a portable terminal.

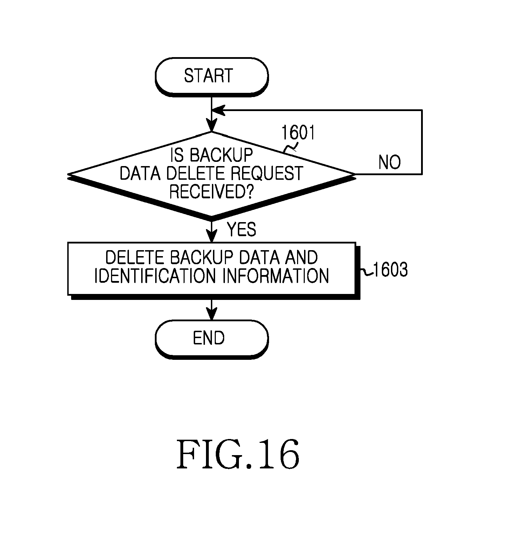

FIG. 16 illustrates a process for deleting contents of a backup server according to an exemplary embodiment of the present invention.

Referring now to FIG. 16, at 1601 the backup server determines whether a backup data delete request is received. The delete request is received together with identification information of backup data.

Upon receiving the delete request, at 1603 the backup server deletes the backup data of contents indicated by the identification information. Further, the backup server deletes the identification information of the backup data.

The method described above in relation with FIG. 16 under of the present invention may be provided as one or more instructions in one or more software modules, or computer programs stored in an electronic device including a portable terminal.

The present invention may be implemented in an electronic device including a portable terminal such as, for example, a smart phone and a mobile telecommunication terminal. Hereunder, a portable terminal is used as an example for the electronic device.

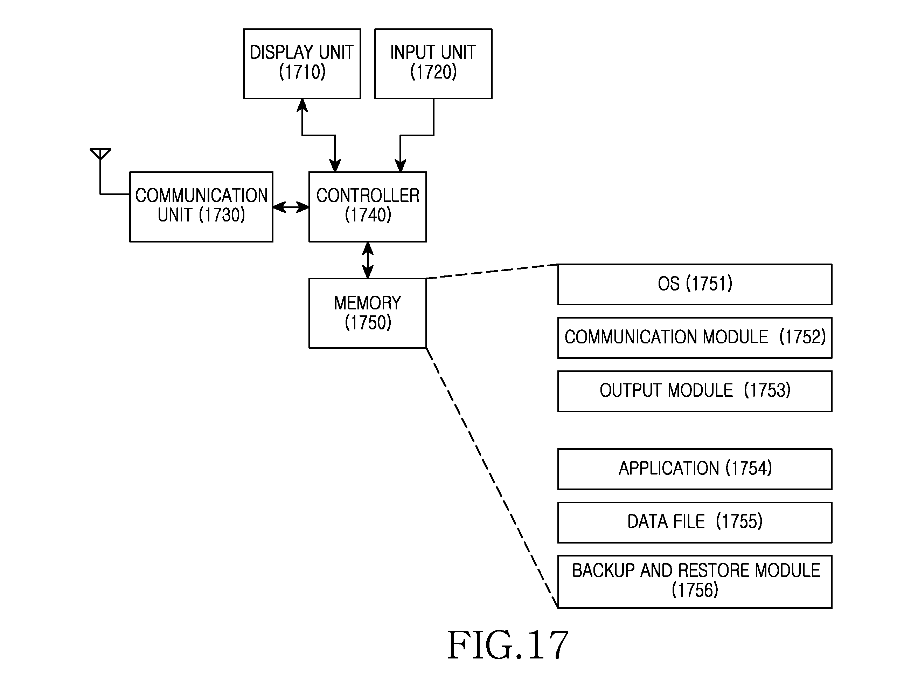

FIG. 17 is a block diagram illustrating a structure of an electronic device according to an exemplary embodiment of the present invention.

Referring now to FIG. 17, the electronic device includes hardware including a display unit 1710 that preferably comprises a touch screen display, an input unit 1720 that comprises a keyboard or keypad, a communication unit 1730 that comprises a transceiver, a controller 1740 comprising a processor or microprocessor, and a non-transitory memory 1750. In the event the display unit comprises a touch screen, the input unit 1720 is optional, or may be part of the display of the touch screen when an application requires a keyed entry.

More particularly, the display unit 1710 provides an input/output interface between the electronic device and a user. For example, the display unit 1710 displays status information of the electronic device, a character input by a user, a moving picture, a still picture, etc., according to an output module 1753 stored in the memory 1750. For example, although not limited thereto, the display unit 1710 may be constructed of a Liquid Crystal Display (LCD), a Light Emitting Diode (LED), a Light emitting Polymer Display (LPD), an Organic Light Emitting Diode (OLED), an Active Matrix Organic Light Emitting Diode (AMOLED), or a Flexible LED (FLED). Other types of thin-film technology (TFT) displays may be used. According to the exemplary embodiment of the present invention, the display unit 1710 displays an identifier (e.g., icon) of contents stored in the electronic device. In this case, the identifier of the contents displayed in the display unit 1710 is an identifier of backed up contents and an identifier of non-backed up contents. The identifier of the backed up contents is distinguished from the identifier of the non-backed up contents according to a predetermined rule.

The input unit 1720 provides the controller 1740 with input data generated by a user's selection. For example, the input unit 1720 may include only a control button for the control of the electronic device. For another example, the display unit 1710 may be constructed of a touch screen, and may include a keypad. In addition, according to the exemplary embodiment of the present invention, the input unit 1720 may provide the controller 1740 with user's input data corresponding to a contents execution instruction, user's input data corresponding to a backup exception instruction, and user's input data corresponding to a contents delete instruction. The display unit 1710 and the input unit 1720 may be combined as one component in a form of a touch screen. The input unit may also comprise a pointing device.

The communication unit 1730 comprises a transceiver and processes a signal transmitted and received through an antenna. For example, the communication unit 1730 may include an antenna module, a Radio Frequency (RF) processor, an amplifier, a tuner, an oscillator, a digital signal processor, a codec, etc. In addition, according to the exemplary embodiment of the present invention, the communication unit 1730 may communicate with a backup server, and may transmit and receive backup data of contents, identification information, a request for backup data, a delete request for backup data, etc.

The controller 1740 controls typical operations of the electronic device. For example, the controller 1740 may process and control data communication, and may control the execution of contents stored in the electronic device. In particular, according to the exemplary embodiment of the present invention, the controller 1740 performs a contents backup function. For example, the controller 1740 can control the electronic device to perform at least one or all of the processes of FIG. 9 to FIG. 14. In addition, an identifier of the backed up contents can be output to the display unit 1710 under the control of the controller 1740. In this case, the controller 1740 can apply an effect (e.g., specific mark attaching, transparentizing, shading, dotted lining, etc.) for indicating backup to the identifier of the backed up contents. Instructions for functions related to backup according to the exemplary embodiment of the present invention can be implemented in hardware using at least one processor included in the controller 1740. Alternatively, instructions for functions related to backup according to the exemplary embodiment of the present invention can be stored as a software module, and can be executed by the controller 1740. Alternatively, some of instructions for functions related to backup according to the exemplary embodiment of the present invention can be implemented in hardware and the remaining instructions can be implemented in software that is loaded into hardware and executed (configuring the hardware) for operation. The claimed invention under the broadest reasonable interpretation does not constitute software per se.

The memory 1750 is a non-transitory machine readable medium that stores machine executable code for controlling an operation of the electronic device and data generated during the program is executed. As illustrated in FIG. 17, the memory 1750 includes an Operating System (OS) module 1751, a communication module 1752, the output module 1753, at least one application 1754, at least one data file 1755, and a backup and restore module 1756 are some examples of machine executable code stored in the memory.

The OS module 1751 implies a built-in operating system such as WINDOWS, LINUX, Darwin, RTXC, UNIX, OS X, or VxWorks, and includes various software components for controlling a general system operation such as memory management and control, storage hardware (device) control and management, power control and management, etc. The OS module 1751 also performs a function of facilitating communication between various hardware (device) and software constitutional elements. The communication module 1752 includes several software components that are loaded into and configure hardware for processing data transmission and data reception via the communication unit 1730 or an external port. The output module 1753 includes various components for providing and displaying graphics on a touch screen. The term 'graphics' is used as the concept including a text, a web page, an icon, a digital image, a video, an animation, etc.

The at least one application 1754 includes at least one application program for performing a specific function by a user's request and input, for example, a browser, an e-mail, an instant message, word processing, keyboard emulation, an address book, a contact list, a widget, a JAVA enable application, coding, a Digital Right Management (DRM), voice recognition, voice recoding, a position determination function, a location-based service, a music player, etc. The at least one data file 1755 may include at least one of a text, an audio source, an image, and a moving picture. The backup and restore module 1756 includes at least one instruction for contents backup according to the exemplary embodiment of the present invention. For example, the backup and restore module 1756 may include instructions for performing at least one of the processes of FIG. 9 to FIG. 14.

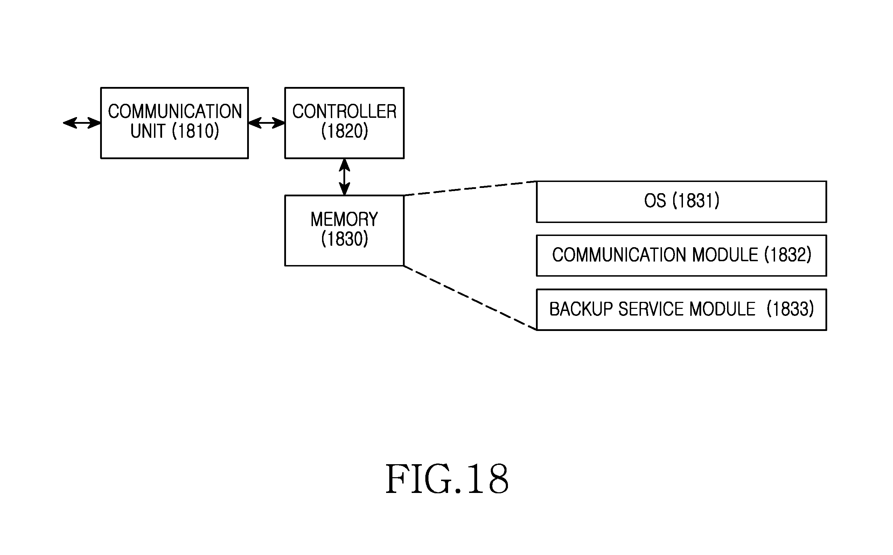

FIG. 18 is a block diagram illustrating a structure of a backup server according to an exemplary embodiment of the present invention, such as the servers 120, 520 previously described herein.

Referring now to FIG. 18, the backup server includes a communication unit 1810 comprising a transceiver, a controller 1820, and a non-transitory memory 1830.

The communication unit 1810 provides a hardware interface for communicating with an electronic device. The controller 1820 controls overall functions of the backup server. In particular, according to the exemplary embodiment of the present invention, the controller 1820 controls functions related to contents backup. For example, the controller 1820 can control the backup server to perform at least one or all of the procedures of FIG. 15 and FIG. 16. Instructions for the backup related functions according to the exemplary embodiment of the present invention can be implemented in hardware using at least one processor included in the controller 1820. Alternatively, instructions for the backup related functions according to the exemplary embodiment of the present invention can be stored in the memory 1830 as a software module and can be executed by the controller 1820. Alternatively, some of the instructions for the backup related functions according to the exemplary embodiment of the present invention can be implemented in hardware and the remaining instructions can be implemented in machine executable code that is loaded into hardware for operation.

The non-transitory memory 1830 comprises a machine readable medium that stores machine executable for controlling an operation of the backup server and data generated during the program is executed. As shown in FIG. 18, the memory 1830 preferably includes an OS module 1831, a communication module 1832, and a backup service module 1833.

The OS module 1831 implies a built-in operating system such as WINDOWS, LINUX, Darwin, RTXC, UNIX, OS X, or VxWorks, and includes various software components for controlling a general system operation such as memory management and control, storage hardware (device) control and management, power control and management, etc., and is loaded into hardware for execution

The OS module 1831 when configuring hardware for operation also performs a function of facilitating communication. The communication module 1832 includes various software components loaded into hardware for execution to processing data transmission and data reception via the communication unit 1810. The backup service module 1833 includes at least one instruction for contents backup according to the exemplary embodiment of the present invention. For example, the backup service module 1833 may include instructions for performing at least one of the procedures of FIG. 15 and FIG. 16.

The above-described methods according to the present invention can be implemented in hardware, firmware or as software or computer code that is stored in a recording medium such as a CD ROM, flash, EPROM, EEPROM, RAM, a floppy disk, thumbnail drive, a hard disk, or a magneto-optical disk, or computer code downloaded over a network originally stored on a remote recording medium and then stored on a non-transitory medium and loaded into hardware such as a processor, microprocessor, or controller. A sub-processor or additional processor may be configured to perform some of the functions disclosed herein as performing to the processor. The machine executable code stored on the non-transitory machine readable medium can be stored on a local recording medium, and is loaded into hardware such as a general purpose computer, or a special processor or in programmable or dedicated hardware, such as an ASIC or FPGA. As would be understood in the art, the computer, the processor, microprocessor controller or the programmable hardware include memory components, e.g., RAM, ROM, Flash, etc. that may store or receive software or computer code that when accessed and executed by the computer, processor or hardware implement the processing methods described herein. In addition, it would be recognized that when a general purpose computer accesses code for implementing the processing shown herein, the execution of the code transforms the general purpose computer into a special purpose computer for executing the processing shown herein. In addition, an artisan understands and appreciates that a "processor", "microprocessor" or "unit" comprise hardware in the claimed invention. Finally, the claimed invention can include the use of a location information server comprising more than one server, such as a proxy server. Under the broadest valid interpretation, the claimed invention constitutes statutory subject matter in view of 35 U.S.C. §101 and does not constitute software per se.

When implemented in software that is loaded into hardware a computer readable non-transitory machine readable medium for storing executable code is provided. One or more programs stored in the computer readable recording medium are configured for execution by being loaded into one or more processors and executed in an electronic device such as a portable terminal. The machine executable code is stored, for example, in a random access memory, a non-volatile memory including a flash memory, a Read Only Memory (ROM), an Electrically Erasable Programmable Read Only Memory (EEPROM), a magnetic disc storage device, a Compact Disc-ROM (CD-ROM), Digital Versatile Discs (DVDs) or other forms of optical storage devices, and/or a magnetic cassette. Alternatively, the program can be stored in a non-transitory memory configured in combination of all or some of these storage media. In addition, the memory configured may be plural in number as well as type, but in all cases is a statutory memory.

Furthermore, non-transitory storage device capable can be remotely accessed by the electronic device through a communication network such as the Internet, an Intranet, a Local Area Network (LAN), a Wide LAN (WLAN), or a Storage Area Network (SAN) or a communication network configured by combining the networks. The storage device can access via an external port to the device for performing the exemplary embodiment of the present invention. Furthermore, an additional storage device on the communication network can access to the device for performing the exemplary embodiment of the present invention.

According to exemplary embodiments of the present invention, by backing up contents on the basis of a user pattern of an electronic device, not only a limitation of a spatial constraint of the electronic device can be avoided, but also a storage space of the electronic device can be further effectively utilized.

## Claims

1. A method of operating an electronic device, the method comprising:
selecting by a controller contents stored in the electronic device to be backed up on the basis of a predetermined usage pattern of the contents;
generating by the controller backup data of the contents; and
transmitting by a transmitter the backup data to a backup server.

2. The method of claim 1, further comprising displaying by a display screen an icon representing visually distinguishing contents that have been backed up on the backup server from at least another icon that indicates non-backed up contents.

3. The method of claim 1, further comprising analyzing by the controller of the electronic device the usage pattern of the contents, wherein the usage pattern includes at least one of a per-contents usage time measured during a pre-defined unit time, a per-contents usage frequency, a usage time period of the contents, and a device usage rate per time period.

4. The method of claim 3, wherein the selecting of the contents by the controller of the electronic device to be backed up on the basis of the usage pattern of the contents comprises:
determining by the controller of the electronic device a priority of each of the contents on the basis of the usage pattern of the contents; and
selecting by the controller of the electronic device a backup target according to at least one of the per-contents usage frequency and the priority.

5. The method of claim 1, wherein the generating of the backup data comprises:
when the controller of the electronic device determines that contents correspond to a data file, generating a compressed file or a data group including the data file; and
when the controller of the electronic device determines that contents correspond to an application, generating a folder structure in a state in which the application is installed, a file required to execute the application, a data group including a file generated in a process of executing the application, or a compressed file.

6. The method of claim 1, wherein the transmitting of the backup data by the transmitter comprises transmitting the backup data at a time period having a minimum usage rate of the electronic device in a pre-defined time range.

7. The method of claim 1, wherein the transmitting of the backup data by the transmitter comprises transmitting the backup data when an available memory capacity is less than or equal to a threshold.

8. The method of claim 1, further comprising that the electronic device, after transmitting the backup data, receiving unique identification information of the backup data from the backup server.

9. The method of claim 8, further comprising that the electronic device, after the transmitter transmitting the backup data, deleting remaining parts from the data related to the contents, other than the information required to restore the contents and the information indicating the existence of the contents, wherein information required to restore the contents and information indicating the existence of the contents include at least one of a contents name, a storage path a folder structure and an icon.

10. The method of claim 8, further comprising, after the electronic device receives unique identification information of the backup data, deleting remaining parts, other than the information required to restore the contents and the information indicating the existence of the contents, from the data related to the contents, wherein information required to restore the contents and information indicating the existence of the contents include at least one of a contents name, a storage path, a folder structure and an icon.

11. A method of operating an electronic device, the method comprising:
upon generation by a controller of the electronic device of an instruction for executing previously-backed up contents, transmitting a request for to a backup server to receive backup data of the backed up contents that includes a unique identification information of the backup data previously received from the backup server;
receiving the backup data from the backup server;
restoring the contents using information required to restore the backed up contents; and
executing the contents.

12. The method of claim 11, further comprising:
confirming by the controller of the electronic device contents designated as a backup exception;
when the contents designated as the backup exception is in a backup state, transmitting a request to the backup server for the backup data of the contents designated as the backup exception;
receiving from the backup server the backup data of the contents designated as the backup exception; and
restoring the contents designated as the backup exception from the backup data.

13. A method of operating a backup server, the method comprising:
receiving backup data from a user device;
storing the backup data;
assigning a unique identification information to the backup data; and
transmitting the unique identification information to the user device.

14. The method of claim 13, further comprising:
upon receiving a request for the backup data from the user device including the unique identification information, searching for backup data corresponding to the unique identification information; and
transmitting the backup data to the user device.

15. An electronic device arranged to implement a method of one of claims 1 to 14.
